# EUROPÄISCHE PATENTANMELDUNG

(11) **EP 0 763 501 A1**
(43) Veröffentlichungstag der Anmeldung: **19.03.1997**
(21) Anmeldenummer: 96113994.6
(22) Anmeldetag: 02.09.1996
(51) Int. Cl.: C02F 1/26

(54) **Verfahren zur Beseitigung von adsorbierbaren organischen Halogenverbindungen aus Abwässern**

(30) Priorität: 13.09.1995 DE 19533889
(71) Anmelder: HOECHST AKTIENGESELLSCHAFT, 65926 Frankfurt am Main (DE)
(72) Erfinder: Semel, Joachim, Dr., 65817 Eppstein (DE); Tetzlaff, Heribert, Dr., 63128 Dietzenbach (DE)

(57) **Zusammenfassung**

Die Erfindung betrifft ein Verfahren zur Beseitigung von adsorbierbaren organischen Halogenverbindungen aus einer wäßrigen Phase, insbesondere aus Abwasser oder aus einer Prozeßlösung, bei dem die wäßrige Phase in einer Flüssig-Flüssig-Extraktion mit einem nichtwäßrigen Extraktionsmittel behandelt wird, dadurch gekennzeichnet, daß man nach der Extraktion die adsorbierbaren organischen Halogenverbindungen im Extraktionsmittel einer Wurtz-Fittig-Reaktion unterzieht.

In den nicht wäßrigen Extraktionsmittel entstehen lediglich geringe Mengen unkritischer Produkte wie NaOH und HCl, die leicht abgetrennt werden können.

Durch dieses Verfahren werden die Chemikalienkosten, die bei der Beseitigung der adsorbierbaren organischen Halogenverbindungen üblicherweise anfallen, erheblich vermindert.

## Beschreibung

Die Erfindung betrifft ein Verfahren zur Beseitigung von adsorbierbaren organischen Halogenverbindungen aus einer wäßrigen Phase, insbesondere aus Abwasser oder aus einer Prozeßlösung, bei dem das Abwasser oder die Prozeßlösung in einer Flüssig-Flüssig-Extraktion mit einem nichtwäßrigen Extraktionsmittel behandelt wird.

Verfahren der genannten Art sind bekannt, beispielsweise aus der DE 34 15 464. In dieser Schrift wird ein Verfahren zur Beseitigung von adsorbierbaren organischen Halogenverbindungen (AOX) aus Abwasser durch Flüssig-Flüssig-Extraktion beschrieben, bei dem zuerst aus dem Extraktionsmittel unter Zugabe eines löslichen sorptionsbegünstigtenden Mittels eine temporärstabile Dispersion in wäßrige Phase hergestellt, dann diese Dispersion dem Abwasser zugeführt wird, und nach der Extraktion das dispergierte Extraktionsmittel aus dem Abwasser mittels eines gesonderten Abtrennschrittes abgeschieden wird. Das abgeschiedene, mit den AOX beladene Extraktionsmittel muß dann entweder direkt entsorgt (verbrannt) oder von den AOX befreit werden, beispielsweise durch Destillation. Die Verbrennung ist ein kostspieliges Verfahren und bei der Aufarbeitung mittels Destillation stellt sich wieder die Frage der Entsorgung des mit AOX angereicherten Destillationssumpfes. Außerdem erfordert die Zugabe des sorptionsbegünstigenden Mittels weiteren apparativen bzw. verfahrenstechnischen Aufwand.

Der Erfindung lag daher die Aufgabe zugrunde, ein Verfahren der eingangs genannten Art dahingehend zu verbessern, daß der apparative bzw. verfahrenstechnische Aufwand vermindert und die Entsorgung bzw. Aufarbeitung des mit AOX beladenen Extraktionsmittels vereinfacht wird.

Dazu ist bekannt, daß halogenhaltige organische Moleküle (zum Beispiel chlorhaltige) in einem inerten Lösungsmittel nach Art der bekannten Wurtz-Fittig-Reaktion zersetzt werden können:

2 R-Cl + 2 Na → R-R + 2 NaCl

Die organischen Moleküle reagieren mit flüssigem, dispergiertem Natrium zu Dimeren und Natriumchlorid. Die Reaktion wurde erfolgreich von der Firma Degussa AG, Deutschland eingesetzt, um AOX und Dioxine in Sickeröl aus Deponien zu zerstören (DE-A 28 13 200).

Nach dem Stand der Technik wird die Reaktion auch zur Enthalogenierung von PCB in Transformatorenölen - siehe z.B. DE-A 42 06 308 - eingesetzt.

Des weiteren findet die Reaktion Einsatz bei der Zerstörung von PCB oder Dioxin in Feststoffen, indem nach Elution der Feststoffe mit einem inerten Elutionsmittel die Zersetzung der AOX-Substanzen in dem Elutionsmittel gemäß obiger Reaktion stattfindet - siehe z.B. DE-A 42 03 665.

Bei all diesen Einsätzen wird Wasser sorgfältig ausgeschlossen, um Zersetzungsreaktionen des Natriums zu vermeiden. Um so überraschender ist es, daß diese Technologie zur Vernichtung von AOX in Abwasserextrakten oder Extrakten aus wäßrigen Prozeßlösungen, die immer eine gewisse Menge Wasser enthalten, problemlos eingesetzt werden kann. Das Prinzip ist hierbei, möglichst unpolare, wenig wasseraufnehmende Extraktionsmittel einzusetzen, um sowohl eine unerwünschte Zersetzung des zur Wurtz-Fittig-Reaktion eingesetzten, fein dispergierten Natriums zu vermeiden als auch um den betriebswirtschaftlich unerwünschten Verlust an Natrium durch die Reaktion mit dem Wasser im Extraktionsmittel (zu NaOH) möglichst gering zu halten.

Die Aufgabe wird daher erfindungsgemäß bei einem Verfahren der angegebenen Art dadurch gelöst, daß man nach der Extraktion die AOX im Extraktionsmittel einer Wurtz-Fittig-Reaktion unterzieht.

Gegenstand der Erfindung ist somit ein Verfahren zur Beseitigung von AOX aus einer wäßrigen Phase, insbesondere eines Abwasser oder einer Prozeßlösung bei dem das Abwasser oder die Prozeßlösung in einer Flüssig-Flüssig-Extraktion mit einem nicht wäßrigen Extraktionsmittel behandelt wird, dadurch gekennzeichnet, daß man nach der Extraktion die AOX im Extraktionsmittel einer Wurtz-Fittig-Reaktion unterzieht.

Bevorzugte Ausführungsformen ergeben sich aus den Ansprüchen 2 bis 8.

Es können auch einzelne oder mehrere der in den Ausführungsformen beschriebene Einzelmerkmale jeweils für sich erfindungsgemäße Lösungen darstellen und es sind auch die Einzelmerkmale beliebig kombinierbar.

Die Anforderungen an den Gehalt an AOX, der nach der biologischen Klärstufe noch in Abwässern vorhanden sein darf, sind in der Europäischen Union mit 1 mg AOX/l sehr streng. Die Flüssig-Flüssig-Extraktion (FFE) kann zur Erfüllung dieser Forderung einen entscheidenden Beitrag leisten, insbesondere, wenn sie erfindungsgemäß mit der Vernichtung der AOX-verursachenden Substanz in der organischen Phase verknüpft wird. Der große Vorteil dieses neuen Verfahrens liegt darin, daß es allein auf die AOX abzielt, während geläufige Methoden zur AOX-Beseitigung in Abwasser zusammen mit den AOX auch alle anderen Substanzen, die den chemischen Sauerstoff bedarf (CSB) eines Abwassers ausmachen, beseitigen, was einen grundsätzlichen Nachteil birgt: Der CSB eines typischen Abwassers ist etwa zehnmal höher als der AOX, da das Halogen-Atom, das den AOX verursacht, nur eines von vielen Atomen in einer organischen Verbindung im Abwasser ist. Bei der analytischen Bestimmung des CSB-Werts liefern aber alle Atome eines organischen Moleküls einen Beitrag, während bei den AOX nur das Halogen-Atom einen Beitrag liefert. Daher ist der Bedarf an Chemikalien und die entsprechenden Abwasserreinigungskosten bei der Beseitigung der AOX zusammen mit dem CSB viel höher als bei Beseitigung der AOX allein. Wenn man in erster Näherung annimmt, daß alle genannten Methoden zu ihrer Ausführung Apparate, Personal und Energien benötigen, deren Kosten vergleichbar sind, ergeben sich durch die selektive AOX-Beseitigung über die Chemikalien-Kosten erhebliche wirtschaftliche Vorteile.

Einige Beispiele zur Reinigung eines typischen Abwassers mit 20 g/l CSB und 2 g/l AOX durch klassische Methoden (Aktivkohle-Adsorption, Ozonoxidation) zeigt Tabelle 1. Zum Vergleich ist auch das erfindungsgemäße Verfahren aufgeführt.

**Tabelle 1**

| Typische Chemikalienkosten zur AOX-Beseitigung aus Abwasser durch Beseitigung des CSB verglichen mit der Beseitigung der AOX alleine | | | | |
|---|---|---|---|---|
| Verfahren | | Ozon-Oxidation | Kohle-Adsorption | gemäß Erfindung |
| CSB-Gehalt | [g/l] | 20 | 20 | 20 |
| AOX-Gehalt | [g/l] | 2 | 2 | 2 |
| chemische Agens | | Ozon | Aktivkohle | Natrium |
| Preis | [DM/kg] | 5,00 | 4,00 | 6,50 |
| Verbrauch für CSB | [kg/kg] | 2,00 | 2,50 | - |
| Verbrauch für AOX | [kg/kg] | 20,00 | 25,00 | 0,66 |
| Preis für CSB-Beseitigung | [DM/kg] | 10,00 | 10,00 | - |
| Preis für AOX-Beseitigung | [DM/kg] | 100,00 | 100,00 | 4,29 |
| Preis für AOX-Beseitigung | [DM/m³] | 200,00 | 200,00 | 8,58 |

So werden z.B. bei der Aktivkohle-Adsorption mindestens 2,5 kg Aktivkohle benötigt, um 1 kg CSB aus dem Abwasser zu entfernen, wenn man die maximale Kapazität gängiger Aktivkohlen von etwa 40 % ausnutzen kann. Zusammen mit diesem CSB wird ein gewisser Anteil AOX aus dem Abwasser entfernt - in unserem Beispiel 1/10. Um 1 m³ unseres Beispielabwassers mit 2 g AOX/l zu reinigen muß daher Aktivkohle für 200,00 DM eingesetzt werden, wobei 9/10 dieser Summe zur Mitbeseitigung des CSB benötigt werden. Entsprechendes gilt für die Abwasserreinigung mit Ozon (siehe Tabelle 1).

Die Chemikalienkosten verringern sich bei Einsatz des erfindungsgemäßen Verfahrens laut Tabelle 1 von den vorher errechneten 200,00 DM/m³ auf 8,60 DM/m³.

Ein weiterer Vorteil des Verfahrens besteht darin, daß die klassische AOX-Beseitigungsmethode durch einfache Flüssig-Flüssig-Extraktion mit der Erzeugung einer großen Menge von Sekundärproblemen/-abfall verbunden ist. Die organische Phase muß nach der Extraktion entweder als Ganzes der Verbrennung zugeführt werden oder es ist eine Destillation oder Rückextraktion vonnöten, die das Extraktionsmittel zwar recyclingfähig macht, aber auch einen Rückextrakt oder Destillationsrückstand schafft, der weiterverwertet oder verbrannt werden muß. Bei der hier beanspruchten Kombination von Flüssig-Flüssig-Extraktion und Wurtz-Fittig-Reaktion werden lediglich geringe Mengen der harmlosen Produkte NaOH und NaCl in der organischen Phase gebildet, die vor deren Wiedereinsatz durch eine einfache Filtration oder eine Wasserwäsche abgetrennt werden können. Die ebenfalls im Extraktionsmittel gebildeten Dimere sind in der Regel größere, unpolare und daher wasserunlösliche organische Moleküle, die sich von Zyklus zu Zyklus langsam in der organischen Phase anreichern. Bei den zu extrahierenden AOX-Mengen handelt es sich (s. o.) dabei zumeist um geringe Mengen (ppm-Bereich), so daß es lange dauert, bis sich eine entsprechende Menge Dimer im Extraktionsmittel angereichert hat. Falls die Dimere die Extraktion nicht behindern, kann das Extraktionsmittel immer weiter rezirkuliert werden, andernfalls muß es gelegentlich destillativ aufgearbeitet und der Rückstand verbrannt werden. Entsprechendes gilt für andere halogenfreie Verbindungen, die den CSB mit ausmachen.

Zur Vernichtung von eventuellem Na-Überschuß (die 105 % der stöchiometrischen AOX-Menge entsprechende Na-Menge sollte ausreichend sein) ist die Rückextraktion am günstigsten, weil dann das Natrium gleich mit dem Wasser zersetzt wird, während es bei der Filtration zur unerwünschten Anreicherung von Na-Resten im Filterrückstand kommen kann, die dann mit i-Propanol umgesetzt werden können.

In einer bevorzugten Ausführung des Verfahrens kann zunächst die Extraktion, wie üblich, kontinuierlich im Gegenstrom in einem mehrstufigen Extraktor erfolgen, wobei in jedem geeigneten Extraktionsapparat (Mischabsetzer, Kolonne, Zentrifugalextraktor, Graesser-Kontakter, Hohlfaserextraktionsmodul) gearbeitet werden kann.

Das Mengenverhältnis Extraktionsmittel/Prozeßwasser kann zwischen 1:100 und 100:1 liegen, besonders bei Verwendung eines Hohlfaserextraktionsmoduls. In der Regel wird es jedoch zwischen 1:10 und 10:1 liegen.

Als Extraktionsmittel können beliebige organische Lösungsmittel eingesetzt werden, Bedingung ist lediglich, daß diese wenig Wasser aufnehmen, nicht mit Natrium reagieren und eine Extraktionswirkung bezüglich des zu extrahierenden AOX besitzen. Es eignen sich Aromate, Aliphate oder Ether, vorzugsweise Toluol, Paraffin oder Di-n-butylether. Das extrahierte und damit vom AOX gereinigte Abwasser kann der biologischen Stufe einer Kläranlage zugeleitet werden.

Der Extrakt wird in einem Wärmeaustauscher im Gegenstrom zum schon behandelten Extrakt vorgewärmt und schließlich in einem weiteren Wärmeaustauscher durch Beheizung (z.B. mit Dampf oder Wärmeträgeröl) auf Reaktionstemperatur gebracht, die, je nach Siedepunkt des verwendeten Extraktionsmittels, zwischen 100°C und 250°C liegt. Tiefere Temperaturen erfordern eine zu lange Reaktionszeit.

In einem nachgeschalteten Reaktionsapparat (Kessel oder Rohrreaktor) wird die aus dem bekannten AOX des Extrakts zuvor berechnete Menge feindispergierten Natriums zugeschlagen, wobei es sofort zur Reaktion kommt. Dabei kann das Natrium entweder im Reaktionskessel selbst dispergiert werden oder die Natriumdispersion zuvor in einem Extragefäß hergestellt werden. Als Dispergiervorrichtung für das flüssige Natrium kann z.B. ein Hochgeschwindigkeitsemulgator, z.B. ein Ultra-Turrax der Firma IKA-Maschinenbau, D-79219 Staufen, eingesetzt werden. In der betrieblichen Praxis ist es am günstigsten, das Natrium bereits in flüssiger Form vom Hersteller, beispielsweise per beheiztem Tankwagen, zu beziehen (Schmelzpunkt Na: 97,8°C) und in flüssiger Form in den zur Umsetzung benutzten Kessel einzudosieren. Aus Sicherheitsgründen (Vermeidung von natriuminitiierten Lösemittelbränden) sollte die Reaktion unter Stickstoffüberlagerung durchgeführt werden.

Nach erfolgter Umsetzung kann auf zwei Arten weiter verfahren werden. Entweder wird das gebildete Salz aus dem Extraktionsmittel ausfiltriert und die Rückführung in das Vorratsgefäß für das Extraktionsmittel erfolgt über den o.g. Wärmeaustauscher, oder es erfolgt nach dem Wärmeaustausch eine Rückextraktion (mit Wasser) der bei der Wurtz-Fittig-Reaktion gebildeten Salze (NaOH, NaCl) in einem beliebigen Extraktionsapparat (s.o.), wobei die entsprechende Wasserphase ebenfalls der biologischen Klärstufe zugeleitet wird und das Extraktionsmittel dem Vorratsbehälter zugeführt wird. Die Zersetzung des geringen Natriumüberschusses mit dem Rückextraktwasser stellt dabei keine Gefahr dar, weil der Übergang des Natriums in die Wasserphase aus der Lösemittelmatrix langsam erfolgt, so daß keine örtlich hohe Na-Konzentrationen entstehen, die zur Entzündung des Wasser-Lösemittelgemischs führen könnten. Wegen der geringen Menge des bei der Umsetzung des Restnatriums mit dem Rückextraktwasser gebildeten Wasserstoffs empfiehlt es sich jedoch, auch diesen Anlagenteil unter Stickstoffüberlagerung bzw. -spülung zu betreiben.

Die Erfindung soll anhand folgender Beispiele weiter erläutert werden:

### Beispiel 1:

Ein Abwasser aus einer Pyrazolon-Produktion enthielt 34 mg AOX/l, der biologisch nur zu 68 % abbaubar ist. Es wurde siebenstufig, im Gegenstrom, im Mischabsetzer extrahiert. Als Extraktionsmittel wurde Toluol in einem Mengenverhältnis von 1:1 eingesetzt. 92 % des AOX wurden dabei aus dem Wasser in die Extraktionsmittelphase (Toluol) übergeführt. Das verbleibende Abwasser erfüllte nach biologischem Abbau die Forderung nach < 1 mg AOX/l.

Die Extraktionsmittelphase wurde anschließend unter Stickstoff auf 120°C erhitzt und darin 105 % der theoretischen Menge flüssiges Natrium mit dem Emulgator dispergiert. Von den anfänglichen 155 ppm Chlor fanden sich nach 30 Minuten noch < 10 ppm. Das gebildete NaCl, NaOH wurde abfiltriert. Der Wassergehalt der Toluol-Phase sank während der Behandlung lediglich von 0,076 auf 0,055 %, was zeigte, daß die Reaktion des Natriums bevorzugt mit den AOX stattfand und nicht mit Wasser.

### Beispiel 2:

Ein Abwasser wie in Beispiel 1 wurde siebenstufig, im Gegenstrom, im Mischabsetzer extrahiert. Als Extraktionsmittel wurde Paraffin (C₁₂-C₁₈₋Schnitt) in einem Mengenverhältnis von 1:1 eingesetzt. 95,8 % des AOX wurden dabei aus dem Abwasser in die Extraktionsmittelphase (Paraffin) übergeführt. Das verbliebene Abwasser erfüllte nach biologischem Abbau die Forderung nach < 1 mg AOX/l.

Die Extraktionsmittelphase wurde anschließend unter Stickstoff auf 200°C erhitzt und darin 105 % der theoretischen Menge flüssiges Natrium mit dem Emulgator dispergiert. Von den anfänglichen 165 ppm Chlor fanden sich nach 10 Minuten noch < 10 ppm. Das gebildete NaCl, NaOH wurde abfiltriert. Der Wassergehalt der Paraffin-Phase sank während der Behandlung lediglich von 0,23 auf 0,11 %.

### Beispiel 3:

Ein Abwasser aus einer Produktion von 2,4-Dichlor-5-sulphamido-benzoesäure enthielt 4100 mg AOX/l, der biologisch praktisch nicht abbaubar ist. Es wurde fünfstufig, im Gegenstrom, im Mischabsetzer extrahiert. Als Extraktionsmittel wurde Di-n-butylether in einem Mengenverhältnis von 2:1 eingesetzt. 35 % des AOX wurden dabei bei pH 5,3 aus dem Abwasser in die Extraktionsmittelphase (Di-n-butylether) übergeführt. Das verbleibende Abwasser erfüllte zwar nicht die Forderung nach < 1 mg AOX/l, aber die (noch optimierbare) Abtrennung seines Teils des AOX trug erheblich zur Entlastung der biologischen Kläranlage bei.

Die Extraktionsmittelphase wurde anschließend unter Stickstoff auf 140°C erhitzt und darin 105 % der theoretischen Menge flüssiges Natrium mit dem Emulgator dispergiert. Von den anfänglichen 430 ppm Chlor fanden sich nach 30 Minuten noch < 5 ppm. Das gebildete NaCl, NaOH wurde abfiltriert. Der Wassergehalt der Di-n-butylether-Phase sank während der Behandlung von lediglich 0,165 unter die Nachweisgrenze (< 0,01 %) ab.

## Patentansprüche

1. Verfahren zur Beseitigung von adsorbierbaren organischen Halogenverbindungen aus einer wäßrigen Phase, insbesondere aus Abwasser oder aus einer Prozeßlösung, bei dem die wäßrige Phase in einer Flüssig-Flüssig-Extraktion mit einem nichtwäßrigen Extraktionsmittel behandelt wird, dadurch gekennzeichnet, daß man nach der Extraktion die adsorbierbaren organischen Halogenverbindungen im Extraktionsmittel einer Wurtz-Fittig-Reaktion unterzieht.

2. Verfahren nach Anspruch 1, dadurch gekennzeichnet, daß die Extraktion eine Gegenstromextraktion ist und mehrstufig durchgeführt wird.

3. Verfahren nach Anspruch 1 oder 2, dadurch gekennzeichnet, daß das Extraktionsmittel unpolar ist und nicht mit Natrium reagiert.

4. Verfahren nach einem oder mehreren der Ansprüche 1 bis 3, dadurch gekennzeichnet, daß das Mengenverhältnis wäßrige Phase/Extraktionsmittel zwischen 1:100 und 100:1, vorzugsweise zwischen 1:10 und 10:1 liegt.

5. Verfahren nach einem oder mehreren der Ansprüche 1 bis 4, dadurch gekennzeichnet, daß als Extraktionsmittel Aromate, Aliphate und Ether, die gegen Natrium bei erhöhter Temperatur stabil sind, eingesetzt werden, vorzugsweise Toluol, Paraffin oder Di-n-butylether.

6. Verfahren nach einem oder mehreren der Ansprüche 1 bis 5, dadurch gekennzeichnet, daß die Reaktion der extrahierten adsorbierbaren organischen Halogenverbindungen im Extraktionsmittel mit Natrium bei Temperaturen zwischen dem Schmelzpunkt des Natriums und dem Siedepunkt des Lösungsmittels, bevorzugt zwischen 100°C und 250°C erfolgt.

7. Verfahren nach einem oder mehreren der Ansprüche 1 bis 6, dadurch gekennzeichnet, daß nach der Wurtz-Fittig-Reaktion überschüssig eingesetztes Natrium und die gebildeten Salze durch Filtrieren oder durch Rückextraktion mit Wasser aus dem Extraktionsmittel abgetrennt werden.

8. Verfahren nach einem oder mehreren der Ansprüche 1 bis 7, dadurch gekennzeichnet, daß das Extraktionsmittel im Kreislauf geführt wird und die behandelte wäßrige Phase anschließend der biologischen Stufe einer Kläranlage zugeleitet wird.

9. Verwendung von unpolaren Extraktionsmitteln, die gegen Natrium bei erhöhter Temperatur stabil sind, zur Durchführung des Verfahrens nach einem oder mehreren der Ansprüche 1 bis 8.

10. Verwendung gemäß Anspruch 9, dadurch gekennzeichnet, daß die unpolaren Extraktionsmittel Aromate, Aliphate oder Ether sind, bevorzugt Toluol, Paraffin oder Di-n-butylether.
